(19) Europäisches Patentamt
European Patent Office
Office européen des brevets

(11) Numéro de publication: **0 116 489**
**A1**

(12) **DEMANDE DE BREVET EUROPEEN**

(21) Numéro de dépôt: **84400051.3**

(22) Date de dépôt: **11.01.84**

(51) Int. Cl.³: **C 07 F 3/12**
A 01 N 55/06

(30) Priorité: **13.01.83 FR 8300442**

(43) Date de publication de la demande:
**22.08.84 Bulletin 84/34**

(84) Etats contractants désignés:
**AT BE CH DE FR GB IT LI LU NL SE**

(71) Demandeur: **Centre Technique Industriel dit: INSTITUT TEXTILE DE FRANCE**
**35, rue des Abondances B.P. 79**
**F-92105 Boulogne Billancourt Cedex(FR)**

(72) Inventeur: **Chatelin, Roger**
**36 Allée des Monts d'Or Domaine de Bois Dieu**
**F-69380 Lissieu(FR)**

(72) Inventeur: **Bourgeois, Michel**
**13, rue de Montbrillant**
**F-69003 Lyon(FR)**

(72) Inventeur: **Wattiez, Daniel**
**4 allée du Bois d'Ars Domaine de Bois Dieu**
**F-69380 Lissieu(FR)**

(74) Mandataire: **Hasenrader, Hubert et al,**
**Cabinet BEAU DE LOMENIE 55, rue d'Amsterdam**
**F-75008 Paris(FR)**

(54) **Nouveaux dérivés du mercurobutol et leur application à la protection de supports notamment textiles.**

(57) Les nouveaux dérivés du mercurobutol sont caractérisés en ce qu'ils comportent, lié au noyau phénolique, du mercurobutol, au moins un groupement fonctionnel capable d'intervenir dans une réaction de polymérisation ou de polyaddition, et en ce qu'ils possèdent les propriétés bioactives du mercurobutol même après être intervenus dans une telle réaction.

Le nouveau dérivé peut agir dans une réaction de greffage soit comme agent de terminaison, soit comme agent de polymérisation.

Le nouveau dérivé greffé sur un support lui assure une protection contre les bactéries, champignons et autres micro-organismes.

EP 0 116 489 A1

Croydon Printing Company Ltd

NOUVEAUX DERIVES DU MERCUROBUTOL ET LEUR APPLICATION A LA PROTECTION DE SUPPORTS NOTAMMENT TEXTILES.

L'invention concerne les produits biologiquement actifs, et plus particulièrement ceux qui peuvent assurer une protection de supports notamment textiles contre les bactéries, champignons et autres micro-organismes. L'invention se rapporte plus précisément au mercurobutol, qui est un agent bioactif bien connu, communément utilisé dans le produit dénommé Mercryl, sous la forme d'une solution alcoolique à 0,5 %.

La protection de supports notamment textiles, contre des agents extérieurs tels que bactéries, champignons etc... par incorporation dans lesdits supports de produits présentant une activité spécifique vis-à-vis desdits agents est déjà bien connue. le brevet français N° 1.274.388 décrit de nombreux exemples de réalisation d'une telle protection, faisant intervenir les techniques de greffage, c'est-à-dire de formation d'un copolymère, à partir d'une chaîne macromoléculaire existante. Parmi les produits bioactifs greffés, on distingue deux catégories extrêmes qui se différencient par le mode d'action de la fonction bioactive. Dans la première, l'agent qui comporte la fonction bioactive est labile, il peut facilement se détacher du greffon et être relargué dans le milieu qui l'entoure. Ces produits ont une activité de protection qui se propage dans le milieu extérieur en contact avec le support : mais la protection est limitée dans le temps et ne résiste pas aux lavages répétés du support. Dans la seconde catégorie, l'agent qui comporte la fonction bioactive est stable, il est par exemple relié au greffon par une liaison covalente, et n'est donc pas relargable dans le milieu qui l'entoure. Ces produits ont une activité de protection par contact : les bactéries, champignons qui viennent en contact avec des produits, sont détruits par les fonctions bioactives du support. La protection conférée par les produits bioactifs greffés à fonction stable est permanente, elle résiste à des cycles répétés de lavage et d'entretien.

Malgré les nombreuses recherches faites dans ce domaine, les produits de cette seconde catégorie n'ont connu aucun développement significatif ; ceci est sans doute dû à la difficulté de trouver un composé ayant un spectre d'activité suffisamment large et qui soit susceptible d'intervenir dans une réaction de greffage.

Or on a trouvé , et c'est ce qui fait l'objet de l'invention, une famille de composés, dérivés du mercurobutol qui convient parfaitement à la protection permanente par greffage de supports notamment textiles. Les éléments de cette famille sont caractérisés en ce qu'ils comportent, lié au noyau phénolique du mercurobutol, au moins un groupement fonctionnel capable d'intervenir dans une réaction de polymérisation ou de polyaddition, et en ce qu'ils possèdent les propriétés bioactives du mercurobutol même après être intervenus dans une telle réaction.

Avantageusement le groupement fonctionnel est un groupement allylique, vinylique, acrylique, un groupement époxy ou un groupement isocyanate.

De préférence ledit groupement est situé en ortho du radical hydroxylé du noyau phénolique du mercurobutol.

Dans la réaction de greffage du support pour lequel on souhaite apporter une protection, le groupement fonctionnel peut intervenir selon deux voies possibles : soit comme agent de polymérisation, soit comme agent de terminaison. Lorsqu'il intervient comme agent de polymérisation, le dérivé du mercurobutol selon l'invention entre dans la constitution du greffon, c'est-à-dire dans la chaîne polymérique qui est fixée sur la structure macromoléculaire du support à protéger, soit seul soit en copolymérisation. Lorsque le groupement fonctionnel intervient comme agent de terminaison, il est mis en oeuvre avec un autre monomère qui constitue la plus grande partie du greffon, le dérivé du mercurobutol selon l'invention se fixant en bout de la chaîne polymérique qu'est le greffon.

Après être intervenus dans la réaction de greffage, les

dérivés selon l'invention possèdent encore les propriétés bioactives du mercurobutol. De ce fait le support greffé possède ces propriétés de manière permanente, puisque par le greffage le dérivé du mercurobutol fait partie de la structure même du support.

Une application particulièrement intéressante de l'invention consiste en la protection des matériaux textiles, notamment ceux utilisés dans le domaine hospitalier ou dans les collectivités, contre le développement des bactéries ou des champignons. Les matériaux textiles, qu'ils soient à base de fibres naturelles, ou de fils ou fibres artificielles ou synthétiques, ont tous une structure macromoléculaire susceptible d'être greffée. Il est donc toujours possible, en fonction des composants entrant dans le matériau textile à protéger, de déterminer une réaction de greffage dans laquelle peut intervenir un dérivé du mercurobutol selon l'invention, de manière à conférer audit matériel textile les propriétés bioactives du mercurobutol de façon permanente. Ainsi greffé, le matériau textile pourra subir des cycles répétés de lavage sans perdre ses propriétés bioactives.

Pour le spécialiste du greffage, il est par ailleurs très facile de maîtriser le taux de greffage , et dans une certaine mesure la longueur des greffons : ainsi il est possible de contrôler le nombre de dérivés du mercurobutol selon l'invention qui interviennent dans la réaction et leur répartition sur la structure macromoléculaire du support à protéger. Cela peut aller d'un seul dérivé selon l'invention lié à des greffons très nombreux mais très courts, à de multiples dérivés selon l'invention entrant dans des greffons peu nombreux mais très longs.

Par ailleurs, le spécialiste du greffage sait quel groupement fonctionnel il faut préférentiellement choisir en fonction du support ou d'un des constituants dudit support à greffer : les groupements allyliques, vinyliques ou acryliques seront mis en oeuvre pour la protection des supports du type cellulosique , par exemple des articles textiles à

base de coton, de viscose ou de fibranne, des papiers ou des non-tissés ; les groupements époxy ou isocyanates seront mis en oeuvre pour la protection des résines,des vernis, ou des peintures.

L'invention sera mieux comprise à l'aide d'un exemple détaillé de réalisation. le mercurobutol est le nom communément donné au para tertiobutyl phénol chloromercuré en ortho. Le dérivé selon l'invention qui va être décrit est le dérivé ortho allylique du mercurobutol. Pour le synthétiser, on a réalisé les étapes successives suivantes :

. partant du para tertiobutyl phénol dissous dans l'éthanol et la potasse on a fait agir le bromure d'allyle ; on a obtenu l'éther allylique du para tertiobutyl phénol que l'on sépare du bromure de potassium.

. on a ensuite réalisé une transposition allylique sous atmosphère d'azote entre 230 et 260°C qui a donné l'ortho allyl para tertiobutyl phénol.

. sur ce dernier composé, on a réalisé une chloro-mercuration par l'acétate mercurique et l'acide chlorhydrique, et on a obtenu le dérivé selon l'invention : l'ortho allyl para tertiobutyl phénol chloromercuré en ortho dont la formule est :

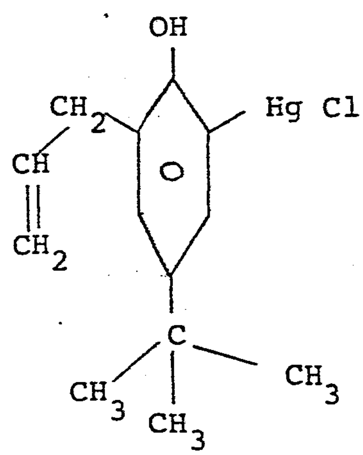

Ce dérivé comporte , lié au noyau phénolique du mercurobutol, un groupement allylique, capable d'intervenir dans une réaction de polymérisation du type radicalaire, par ouverture de la double liaison.

On fait intervenir ce dérivé dans une réaction de greffage sur un matériau textile, ne comportant ni apprêt ni blanchiment, composé à raison de 79 % en poids de dérivés cellulosiques (75 % viscose et 25 % polynosique ) et de 21 % d'un élastodiène guipé coton. Ce matériau est utilisé plus particulièrement comme article de contention, devant exercer une certaine pression élastique sur une partie du corps d'un patient. Pour la réaction de greffage, on a utilisé en plus du dérivé ortho allylique selon l'invention l'acide acrylique , comme monomère principal de formation du greffon. L'activation du support pour créer sur la structure macromoléculaire de l'article textile des sites actifs pour le développement de la réaction de greffage peut être obtenue par voie chimique ou par voie radiochimique. Pour la voie chimique, et dans le cas de composés cellulosiques, on utilise préférentiellement un amorceur cérique selon l'enseignement du brevet français N° 70 42410 appartenant au demandeur. Lorsqu'on opère avec une solution d'acide acrylique non distillé à 60 % (8,3 moles par litre), on peut obtenir des greffages, sans homopolymère, dont le taux varie de 1 à 10 %. Au delà les risques d'obtention d'homopolymère augmentent. Pour la voie radiochimique, on utilise plus particulièrement une irradiation par électrons accélérés à 700 kiloélectronvolts, dosée de 0,5 à 1 Mégarad. Les risques d'homopolymère sont moindres dans ce cas.

Le bain réactionnel est constitué d'un mélange acide acrylique et dérivé ortho allylique du mercurobutol à raison de 1,5 à 3 grammes de ce dernier par litre de bain. A 1,5 grammes par litre, on a obtenu après une réaction de greffage, initié par du nitrate cérique et ayant duré deux heures une teneur de mercure de 0,204 milligramme par gramme de tissu traité.

Pour tester les propriétés bioactives de l'article ainsi greffé, on a réalisé des essais comparatifs en présence d'une souche bactérienne de Pseudonomas aéruginosa CIP A 22. Le disque de tissu à tester est placé sur le fond d'un Erlen

de 250 millilitres. On introduit stérilement 25 millilitres d'eau peptonée dans l'Erlen de façon à recouvrir le disque de tissu jusqu'à la fin des prélèvements. Dans un premier Erlen on a placé un témoin stérile, dans un deuxième un témoin de l'article textile non greffé et 1 millilitre de la souche bactérienne, et dans le troisième le tissu greffé à l'aide de l'acide acrylique et du dérivé ortho allylique selon l'invention. On a effectué des dénombrements bactériens périodiques en prélevant 1 millilitre dans chaque Erlen que l'on incorpore à 10 millilitres de gélose glucosée dans une boîte de Petri ; et en dénombrant les colonies présentes après homogénéisation et solidification de la gélose, et incubation pendant 72 heures à 30°C. Les résultats obtenus sont portés dans le tableau suivant :

| | t=0 | 2h | 4h | 6h | 24h | 48h |
|---|---|---|---|---|---|---|
| Témoin stérile | 0 | 0 | 0 | 0 | 0 | 0 |
| Article non greffé | 133 | 210 | 750 | 2100 | $>10^6$ | $0,5.10^8$ |
| Article greffé | 106 | 27 | 18 | 2 | 0 | 0 |

L'article greffé conserve de façon permanente les propriétés bioactives liées à la présence du noyau mercurobutol dans les greffons. Des lavages successifs durs selon la norme NF 6 07.136 (essai 1 A à 92°C pendant 12 minutes) ont été effectués sur un article greffé ; on a suivi l'évolution du mercure sur l'article : aucune perte de mercure après 2 lavages, une perte de 5% après 5 lavages.

Dans un autre exemple de réaction de greffage dans laquelle on fait intervenir le dérivé allylique du mercurobutol, on traite des échantillons de polyuréthane soit par irradiation dans un faisceau d'électrons accélérés de 700 kiloélectronvolts (la dose reçue étant de 0,5 à 1 mégarad) soit par l'ozone pendant une heure environ. On place ensuite les échantillons dans une solution d'acide acrylique (de 10 à 30 %) et d'allylmercurobutol à un gramme par litre. Dans le cas du traitement à l'ozone, il est nécessaire de chauffer pendant deux heures à 100°C, par contre dans le cas du traitement par irradiation, le greffage se développe à température ambiante. Les taux de mercure obtenus sont

élevés, de 0,5 à 2 milligrammes par gramme de produit sec, et le taux de greffage est de 10 à 15%.

Contrairement à certains produits bioactifs greffés, par exemple ceux salifiés au Cuivre, les produits mettant en oeuvre les dérivés du mercurobutol selon l'invention ne sont pas altérés ni colorés par la présence des greffons bioactifs. Cela constitue un avantage important pour la protection d'articles courants dont les coloris doivent suivre la mode.

L'invention est particulièrement intéressante dans tous les cas où l'on souhaite protéger un support contre l'action des agents tels que bactéries ou champignons, que le support soit un article textile, un papier, un non-tissé, une peinture ou un matériel en matière plastique : il suffit que l'un des constituants du support soit susceptible d'être greffé à l'aide du dérivé du mercurobutol selon l'invention, seul ou avec un ou plusieurs autres monomères.

L'invention est également intéressante lorsque l'on souhaite protéger un milieu donné contre l'action des agents tels que bactéries ou champignons. On utilise alors le support greffé avec un dérivé du mercurobutol selon l'invention comme barrière de protection en faisant passer le milieu à protéger -liquide ou gazeux- à travers ledit support, qui agit partiellement comme barrière mécanique en retenant les agents d'une certaine taille, mais qui agit surtout en détruisant grâce à ses fonctions bioactives les agents qui viennent en contact avec le support greffé. Ainsi une telle barrière de protection acceptera des débits de passage du milieu à traiter beaucoup plus importants que dans le cas du même support non greffé, à efficacité de protection égale.

## REVENDICATIONS

1. Dérivés du mercurobutol caractérisés en ce qu'ils comportent , lié au noyau phénolique du mercurobutol , au moins un groupement fonctionnel capable d'intervenir dans une réaction de polymérisation ou de polyaddition , et en ce qu'ils possèdent les propriétés bioactives du mercurobutol, même après être intervenus dans une telle réaction.

2. Dérivés selon la revendication 1 caractérisés en ce que le groupement fonctionnel intervient comme agent de terminaison.

3. Dérivés selon la revendication 1 caractérisés en ce que le groupement fonctionnel intervient comme agent de polymérisation.

4. Dérivés selon la revendication 1 caractérisés en ce que le groupement fonctionnel est un groupement allylique, vinylique ou acrylique.

5. Dérivé selon la revendication 4, caractérisé en ce qu'il répond à la formule :

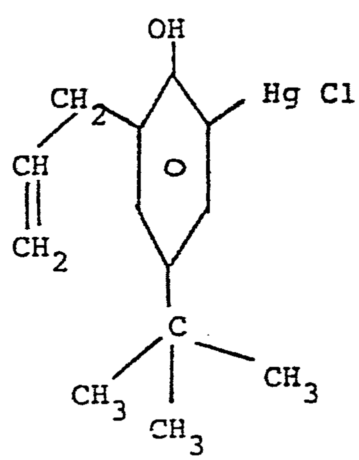

6. Dérivés selon la revendication 1 caractérisés en ce que le groupement fonctionnel est un groupement époxy.

7. Dérivés selon la revendication 1 caractérisés en ce que le groupement fonctionnel est un groupement isocyanate.

8. Application des dérivés selon l'une des revendications 1 à 7 à la protection d'un support caractérisé en ce qu'on réalise le greffage dudit support à l'aide de réactifs dont au moins un desdits dérivés.

0116489

Office européen des brevets

# RAPPORT DE RECHERCHE EUROPEENNE

Numéro de la demande

EP 84 40 0051

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | BE-A- 458 103 (SOC. BELGE DE L'AZOTE ET DES PRODUITS CHIMIQUES DU MARLY) * Page 7, résumé 1; page 5, exemple IV; page 2, dernier alinéa - page 3, ligne 2 * | 1 | C 07 F 3/12<br>A 01 N 55/06 |
| A | US-A-3 516 814 (JOHN C. WOLLENSAK) * Colonne 1, ligne 50 - colonne 2, ligne 51 * | 1 | |
| | | | DOMAINES TECHNIQUES RECHERCHES (Int. Cl. 3) |
| | | | C 07 F 3/00<br>A 01 N 55/00 |

Le présent rapport de recherche a été établi pour toutes les revendications

| Lieu de la recherche | Date d'achèvement de la recherche | Examinateur |
|---|---|---|
| LA HAYE | 03-04-1984 | SUTER M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82